# FASCICULE DE BREVET EUROPEEN

(11) **EP 2 818 750 B1**
(45) Date de publication et mention de la délivrance du brevet: **13.05.2020**
(21) Numéro de dépôt: 14172449.2
(22) Date de dépôt: 13.06.2014
(51) Int. Cl.: F16D 55/36

(54) **Procédé d'utilisation et de rénovation d'un disque d'une pile de disques**
Verfahren zur Verwendung und Erneuerung einer Scheibe eines Scheibenstapels
Method for using and renovating a disc of a disc stack

(30) Priorité: 26.06.2013 FR 1356131
(43) Date de publication de la demande: 31.12.2014
(73) Titulaire: Safran Landing Systems, 78140 Vélizy-Villacoublay (FR)
(72) Inventeur: Chambard, Pierre, 78140 Vélizy-Villacoublay (FR); Vaney, Jean-Baptiste, 78140 Vélizy-Villacoublay (FR)
(74) Mandataire: Lavialle, Bruno François Stéphane

(56) Documents cités:
- US-A- 4 742 895
- US-A- 5 099 960
- US-A1- 2004 112 687

## Description

### ARRIERE PLAN TECHNOLOGIQUE DE L'INVENTION

Les systèmes de freinage de la plupart des aéronefs modernes comportent des freins à disques empilés autour d'un tube de torsion, et des actionneurs de freinage portés par une couronne et commandés pour appliquer un effort de freinage sur les disques en vue d'exercer sur les roues freinées de l'aéronef un couple de freinage tendant à ralentir celui-ci. Parmi les disques, on distingue les disques stator solidaires du tube de torsion, et les disques rotor, solidaires en rotation de la jante de la roue.

Les disques s'usent lors des freinages ce qui oblige à exécuter régulièrement des opérations de maintenance sur la pile de disques pour remplacer une partie ou tous les disques de la pile afin que le frein puisse toujours répondre aux contraintes de freinage qui lui sont imposées. Une fois la course d'usure de la pile de frein consommée, la pile de disques est retirée du frein et envoyée au service expertise - rénovation.

Le document US2004/0112687A1 montre un procédé d'utilisation d'un premier disque de frein.

### OBJET DE L'INVENTION

Un but de l'invention est de proposer un procédé d'utilisation et de rénovation d'un disque d'une pile de disques qui permette une réutilisation poussée des disques usés.

### BREVE DESCRIPTION DE L'INVENTION

L'invention concerne un procédé d'utilisation et de rénovation d'un premier disque de frein, le premier disque ayant une épaisseur initiale en début de première vie et étant de type rotor ou de type stator, le procédé comportant les étapes d'utiliser le premier disque au cours d'une première vie dans une première pile de disques de frein et d'utiliser le premier disque au cours de deux autres vies en compensant une diminution d'épaisseur du premier disque après chaque vie selon les dispositions suivantes :
- après la première vie, surfacer le premier disque et associer le premier disque avec un deuxième disque dans une deuxième pile de disques de frein, le deuxième disque ayant une épaisseur comprise entre 60% et 140% de l'épaisseur initiale et étant de type différent du premier disque;
- après une deuxième vie à l'issue de laquelle le premier disque à une épaisseur comprise entre 50% de l'épaisseur initiale et 50% de l'épaisseur du premier disque à l'issue de sa première vie, surfacer le premier disque et l'assembler avec une portion complémentaire de sensiblement même épaisseur pour former un disque complété qui est utilisé dans une troisième pile de disques de frein et qui est de même type que le premier disque;
- après une troisième vie, rebuter le premier disque.

De la sorte, le premier disque est utilisé durant trois vies avant qu'il ne soit nécessaire de le remplacer par un disque neuf. La durée de vie du premier disque est ainsi optimisée.

Le coût de recyclage d'un tel premier disque s'avère de plus très peu élevé. En effet, en associant le premier disque en début de deuxième vie avec un autre disque d'un autre type, on limite le besoin de créer des portions complémentaires à partir de disques neufs ou de rénover d'anciens disques en portions complémentaires ce qui est coûteux en terme d'argent et de temps.

En outre, grâce à l'invention, il est possible d'avoir un écart d'épaisseur entre le premier disque en début de première vie et le premier disque en début de deuxième vie et un écart d'épaisseur entre le premier disque en début de deuxième vie et le premier disque en début de troisième vie qui sont relativement importants. De la sorte, chaque vie du premier disque peut être très longue : il est en effet possible d'user de manière importante le premier disque avant de devoir compenser sa perte d'épaisseur.

Pour toute la demande, on entend par « vie », un cycle d'utilisation du premier disque dans une pile de disques lorsque la pile de disques est montée sur un véhicule et subit des freinages successifs, la vie commençant lorsque la pile de disques est montée sur le véhicule et s'arrêtant lorsque la pile de disques est démontée du véhicule et envoyée en atelier pour inspection et maintenance.

De même, par « disque », on entend l'élément de friction généralement annulaire, qui présente l'épaisseur initiale en début de première vie et qui subit une usure au niveau de ses faces frottantes lors de chacune des vies suivantes, usure provoquant une diminution de son épaisseur.

De même par « assembler », on entend ajouter une portion complémentaire au premier disque en début de troisième vie de sorte que l'assemblage de la portion complémentaire et du premier disque ait une épaisseur suffisamment épaisse pour permettre d'utiliser l'assemblage au cours d'une vie supplémentaire. Par « disque complété », on entend ainsi l'assemblage du premier disque et d'une portion complémentaire correspondante.

Par « de type stator » (respectivement « de type rotor»), on entend que le disque est toujours utilisé au cours de ces trois vies en tant que disque stator intermédiaire et/ou d'extrémité (respectivement en tant que disque rotor) dans les différentes piles de frein.

De même par « disques stator », on entend l'ensemble des disques suivants d'une pile de disques :
- les disques stator intermédiaires,
- le premier disque stator d'extrémité c'est-à-dire le disque stator sur lequel le poussoir vient s'appuyer, et
- le deuxième disque stator d'extrémité c'est-à-dire le disque stator sur lequel une partie du tube de torsion vient reposer ;
le terme « disque stator » désignant l'un quelconque des disques dénommés ci-dessus. Par disque intermédiaire, on entend bien sûr un disque de la pile de disques qui n'est pas à l'une des extrémités de la pile de disques.

Pour la présente demande, par « épaisseur sensiblement égale », on entend que l'épaisseur a une valeur proche de celle spécifiée, typiquement dans une plage de 5% de l'épaisseur spécifiée.

### BREVE DESCRIPTION DES DESSINS

L'invention sera mieux comprise à la lumière de la description qui suit en référence aux figures des dessins annexés parmi lesquelles :
- la figure 1 est une vue en coupe d'un frein électromécanique ;
- les figures 2a et 2b sont des schémas représentant un disque de la pile de disques du frein illustré à la figure 1 respectivement au début et à la fin de la première vie associé à un autre disque;
- les figures 3a et 3b sont des schémas représentant le disque illustré aux figures 2a et 2b respectivement au début et à la fin de la deuxième vie associé à un autre disque;
- la figure 4 représente une deuxième pile de disques comportant le disque illustré à la figure 3a;
- les figures 5a et 5b sont des schémas représentant le disque illustré aux figures 2a et 2b respectivement au début et à la fin de la troisième vie assemblé à un autre disque;
- la figure 6 représente une troisième pile de disques comportant le disque illustré à la figure 5a.

### DESCRIPTION DETAILLEE DE L'INVENTION

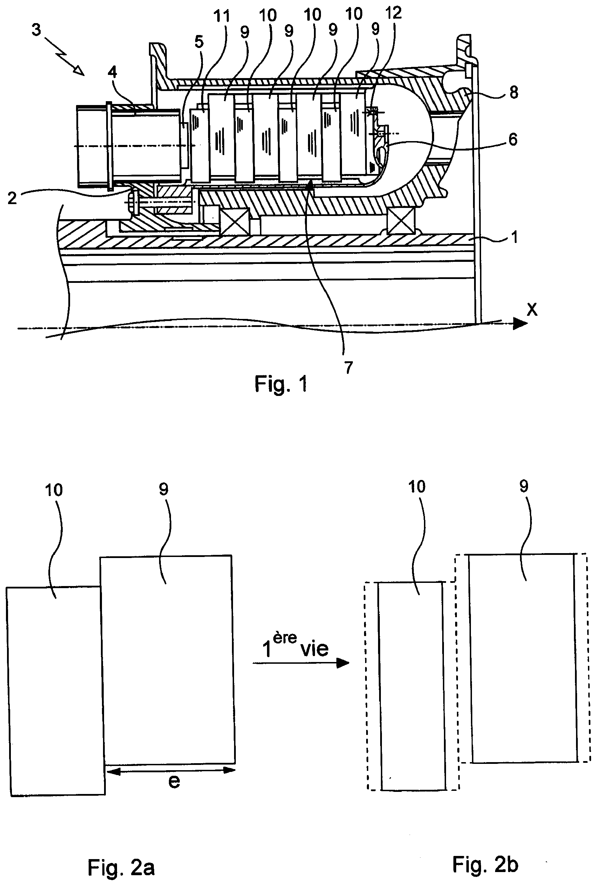

La figure 1 représente un frein qui est destiné à freiner une roue d'aéronef montée sur un essieu 1 d'axe X.

Le frein comporte une couronne 2 montée sur l'essieu 1 et arrêtée en rotation par rapport à celui-ci par des moyens non représentés. La couronne 2 porte des actionneurs 3 (dont un seul est représenté à la figure 1) qui comportent chacun un boîtier 4 dans lequel un poussoir 5 est monté pour coulisser selon une direction axiale parallèle à l'axe X et exercer sélectivement un effort de freinage sur une première pile de disques 7 comportant alternativement des disques rotor solidaires en rotation d'une jante 8 de la roue et des disques stator immobilisés en rotation par un tube de torsion 6 solidaire de la couronne 2.

Les disques rotor et les disques stator peuvent être en tout matériau adapté au freinage comme par exemple en carbone. De préférence, les disques rotor et les disques stator sont d'un même matériau de sorte que les différentes faces frottantes des disques s'usent de façon sensiblement identique.

Le poussoir 5 peut par exemple être actionné par un moteur électrique de l'actionneur associé, le moteur étant agencé pour faire tourner l'un des éléments d'un système vis-écrou, par exemple du type à billes ou à rouleaux, le poussoir étant solidaire de l'autre des éléments du système. Un organe d'anti-rotation empêche alors le poussoir 5 de tourner.

L'application d'un effort de freinage force les disques de la première pile de disques 7 à frotter les uns contre les autres de sorte qu'une partie de l'énergie cinétique de l'aéronef est dissipée en chaleur. Cependant, le frottement des disques entraîne inévitablement l'usure des différentes faces frottantes des disques rotor et disques stator.

La figure 2a représente ainsi l'un des disques rotor 9 de la première pile de disques 7 et l'un des disques stator de la première pile de disques 7. En début de première vie, ledit disque rotor 9 présente une épaisseur initiale e. Le disque 9 est alors un disque monobloc. Le disque 9 est ainsi utilisé tel quel au cours de la première vie dans la première pile de disques 7.

Au cours de ladite première vie, le disque 9 s'use, de façon sensiblement uniforme sur ses deux faces, ce qui va entraîner une diminution de l'épaisseur initiale e.

Ainsi, en référence à la figure 2b, à la fin de la première vie, le disque 9 a une épaisseur inférieure à l'épaisseur initiale e mais supérieure à 50% de l'épaisseur initiale e. La diminution de l'épaisseur du disque 9 au cours de la première vie est illustrée en pointillés.

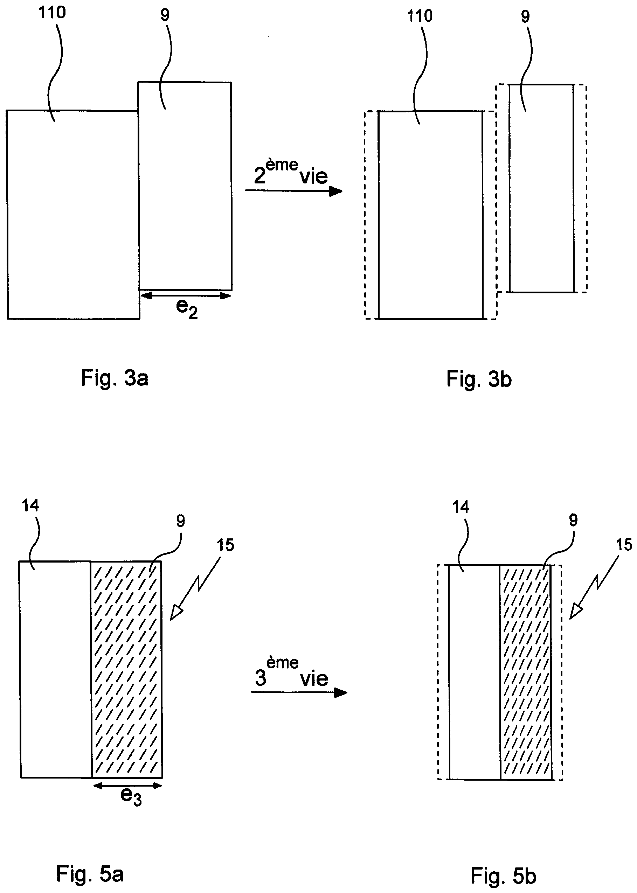

En référence à la figure 3a, on surface les deux faces du disque 9 pour améliorer l'état de surface desdites faces. Le disque 9 a alors une deuxième épaisseur e₂ sensiblement égale ici à 60% de l'épaisseur initiale e.

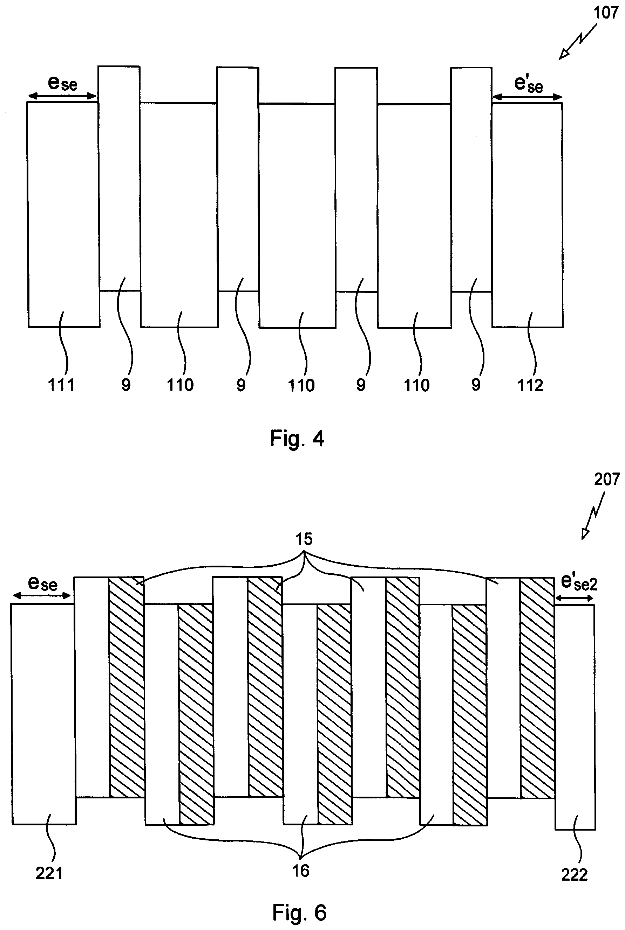

En référence aux figures 3a et 4, pour compenser la diminution d'épaisseur du disque 9, du fait de l'usure subie au cours de la première vie et accessoirement du surfaçage, le disque 9 est utilisé en tant que disque rotor dans une deuxième et nouvelle pile de disques 107 en étant associé avec au moins un disque stator 110 qui est au début de sa première vie, selon le procédé de l'invention, et qui a une épaisseur ici sensiblement égale à l'épaisseur initiale e. Le disque 9 reste donc un disque monobloc lors de sa deuxième vie. Bien entendu, la nouvelle pile de disques 107 peut être montée au même emplacement que la pile de disques 7.

De préférence, la deuxième pile de disque 107 comprend uniquement des disques intermédiaires stator 110 qui sont tous au début de leur première vie, selon le procédé de l'invention, et qui ont tous une épaisseur sensiblement égale à l'épaisseur initiale e. En outre, la deuxième pile de disque 107 comprend ici un premier disque stator d'extrémité 111 qui est au début de sa première vie, selon le procédé de l'invention, et qui a une épaisseur initiale eₛₑ ici sensiblement égale à 85% de l'épaisseur initiale e. La deuxième pile de disque 107 comprend de plus un deuxième disque stator d'extrémité 112 qui est au début de sa première vie, selon le procédé de l'invention, et qui a une épaisseur initiale e'ₛₑ ici sensiblement égale à 90% de l'épaisseur initiale e.

La deuxième pile de disque 107 comprend en outre uniquement des disques rotor 9 qui sont tous au début de leur deuxième vie, selon le procédé de l'invention, et qui ont tous une épaisseur sensiblement égale ici à la deuxième épaisseur e₂. Selon un mode de mise en œuvre particulier, les disques rotor 9 sont tous les disques rotor 9 qui ont été utilisés dans la première pile de disque 7 au cours d'une première vie.

De la sorte, la deuxième pile de disque 107 comporte comme disques rotor uniquement des disques recyclés.

Dans cette configuration, les disques stator 110, 111 et 112 sont appelés disques stator épais et les disques rotor 9 sont appelés disques rotor minces de par leur épaisseur. Les disques stator d'extrémité 111, 112 et les disques stator intermédiaires 110 sont en effet bien plus épais que les disques rotor 9.

Ainsi, l'association des disques rotor 9 de plus faible épaisseur avec des disques stator 110, 111, 112 de plus forte épaisseur permet d'utiliser les disques rotor 9 dans la deuxième pile 107 de disques au cours d'une deuxième vie sans avoir besoin d'assembler les disques rotor 9 avec des portions complémentaires.

En référence à la figure 1, de préférence et de façon similaire :
- tous les disques rotor 9 de la première pile de disques 7 sont au début de leur première vie et ont une épaisseur sensiblement égale à l'épaisseur initiale e;
- tous les disques intermédiaires stator 10 de la première pile de disques 7 sont des disques rénovés selon le procédé de l'invention de sorte à être en début de leur deuxième vie et à avoir une épaisseur ici sensiblement égale à la deuxième épaisseur e₂ ;
- le premier disque d'extrémité 11 de la première pile de disques 7 est un disque rénové selon le procédé de l'invention de sorte à être en début de deuxième vie et à avoir une épaisseur ici sensiblement égale à la deuxième épaisseur e₂ ;
- le deuxième disque d'extrémité 12 de la première pile de disques 7 est un disque rénové selon le procédé de l'invention de sorte à être en début de deuxième vie et à avoir une épaisseur ici sensiblement égale à la deuxième épaisseur e₂ .

Selon un mode de mise en œuvre particulier, les disques intermédiaires stator 10 sont tous les disques intermédiaires stator qui ont été utilisés dans une même pile de disque au cours d'une première vie, le premier disque d'extrémité stator 11 est le disque qui a été utilisé en tant que premier disque d'extrémité dans cette même pile de disque et le deuxième disque d'extrémité 12 est le disque qui a été utilisé en tant que deuxième disque d'extrémité dans cette même pile de disques.

De la sorte, la première pile de disque 7 comporte comme disques stator 10,11 et 12 uniquement des disques recyclés.

Dans cette configuration, les disques rotor 9 sont appelés disques rotor épais et les disques stator 10, 11 et 12 sont appelés disques stator minces de par leur épaisseur.

Ainsi, l'association des disques rotor 9 de plus forte épaisseur avec des disques stator 10, 11, 12 de plus faible épaisseur permet d'utiliser les disques stator intermédiaire et d'extrémité dans la première pile de disques 7 au cours d'une deuxième vie sans avoir besoin d'assembler lesdits disques stator avec des portions complémentaires.

Au cours de sa deuxième vie, le disque 9 s'use, de façon sensiblement uniforme sur ses deux faces, ce qui va entraîner une diminution de la deuxième épaisseur e₂.

Ainsi, en référence à la figure 3b, à la fin de la deuxième vie, le disque 9 a ici une épaisseur sensiblement égale à 40% de l'épaisseur initiale e.

La diminution de l'épaisseur du disque 9 au cours de la deuxième vie est illustrée en pointillés.

En référence à la figure 5a, on surface les deux faces du disque 9 pour améliorer l'état de surface desdites faces. On surface ici le disque 9 jusqu'à ce que le disque 9 ait une troisième épaisseur e₃ sensiblement égale à 40% de l'épaisseur initiale.

Pour compenser la diminution d'épaisseur du disque 9 entre le début et la fin de la deuxième vie, le disque 9 est assemblé avec une portion complémentaire 14 qui a une épaisseur sensiblement égale à la troisième épaisseur e₃ du disque 9.

Les procédés d'assemblage d'un disque avec une portion complémentaire sont bien connus de l'art antérieur et ne seront pas décrits plus en détails ici. Le disque et la portion complémentaire sont par exemple assemblés par collage ou bien encore par clippage par l'intermédiaire de cavaliers rivetés sur le disque et la portion complémentaire.

L'assemblage 15 formé du disque 9 avec la portion complémentaire 14 a donc ici une épaisseur sensiblement égale à 80% de l'épaisseur initiale e.

Selon un mode de mise en œuvre privilégié, la portion complémentaire 14 est un autre disque rotor en début de troisième vie selon le procédé de l'invention c'est-à-dire un autre disque rotor en fin de deuxième vie qui a été surfacé.

De la sorte, il n'est pas nécessaire de produire directement une portion complémentaire à l'épaisseur adaptée en dégradant l'épaisseur d'un disque neuf ou d'un disque en début de deuxième vie selon le procédé de l'invention. Cette portion complémentaire peut en effet être obtenue par surfaçage d'un autre disque rotor en fin de deuxième vie selon le procédé de l'invention.

En référence à la figure 6, le disque complété 15 est alors utilisé en tant que disque rotor dans une troisième et nouvelle pile de disques 207. Le disque 9 est ainsi utilisé dans la troisième pile de disques 207 au cours d'une troisième vie. Bien entendu, la nouvelle pile de disques 207 peut être montée au même emplacement que la pile de disques 107 ou la pile de disques 7.

De préférence, la troisième pile de disque 207 comprend uniquement des disques complétés 15 en tant que disque rotor qui ont une épaisseur sensiblement égale à 80% de l'épaisseur initiale e et uniquement des disques complétés 16 en tant que disques intermédiaires stator qui proviennent de l'assemblage de disques stator en début de troisième vie avec des portions complémentaires selon le procédé de l'invention.

De la sorte, la troisième pile de disques 207 ne comporte que des disques intermédiaires recyclés.

Selon un mode de mise en œuvre particulier, tous les disques rotor 9 utilisés dans la deuxième pile de disque 107 au cours d'une deuxième vie sont ici rénovés selon le procédé de l'invention de sorte à être assemblés avec une portion complémentaire 14 pour former les disques complétés 15. Les portions complémentaires 14 sont par exemple tous les disques rotor utilisés dans une autre pile de disques au cours d'une deuxième vie selon le procédé de l'invention.

En variante, la moitié des disques rotor 9 utilisés dans la deuxième pile de disque 107 au cours d'une deuxième vie sont ici surfacés de sorte à former des portions complémentaires 14 et à être assemblés avec l'autre moitié des disques rotor 9 utilisés dans la deuxième pile de disque 107 au cours d'une deuxième vie et rénovés selon le procédé de l'invention. La troisième pile de disques 207 comprend alors d'autres disques complétés 15 provenant du recyclage d'autres disques rotor par le procédé de l'invention.

De préférence, la troisième pile de disque 207 comporte comme premier disque stator d'extrémité 221 un disque ayant une épaisseur sensiblement égale à celle de l'épaisseur initiale eₛₑ et comme deuxième disque stator d'extrémité 222 un disque ayant une épaisseur e'ₛₑ₂ ici sensiblement égale à 65% à l'épaisseur initiale e'ₛₑ. De préférence, le premier disque stator d'extrémité 221 est un disque en début de première vie selon le procédé de l'invention et le deuxième disque stator d'extrémité 222 est un autre disque en début de deuxième vie selon le procédé de l'invention. Ici, le deuxième disque d'extrémité 222 est le deuxième disque d'extrémité 112 qui a été utilisé au cours d'une première vie dans la deuxième pile de frein 107 et qui a été surfacé.

Au cours de la troisième vie du disque 9, le disque complété 15 s'use de façon sensiblement uniforme sur ses deux faces, c'est-à-dire de façon uniforme sur l'une des faces du disque 9 et sur l'une des faces de la portion complémentaire 14, ce qui va entraîner une diminution de l'épaisseur du disque complété 15 et donc du disque 9.

En référence à la figure 5b, en fin de troisième vie, le disque 9 est ici finalement rebuté. La diminution de l'épaisseur du disque 9 au cours de la troisième vie est illustrée en pointillés.

Grâce au procédé de l'invention, chaque disque peut être rénové et utilisé trois fois selon les dispositions suivantes :

| | Première vie (le disque est alors dit « épais ») | Deuxième vie (le disque est alors dit « mince ») | Troisième vie |
|---|---|---|---|
| Disque de type stator | utilisé comme premier disque stator d'extrémité | utilisé comme premier disque stator d'extrémité | utilisé dans un disque complété lui-même utilisé comme disque stator intermédiaire |
| Disque de type stator | utilisé comme disque stator intermédiaire | utilisé comme disque stator intermédiaire | utilisé dans un disque complété lui-même utilisé comme disque stator intermédiaire |
| Disque de type rotor | utilisé comme disque rotor | utilisé comme disque rotor | utilisé dans un disque complété lui-même utilisé comme disque rotor |
| Disque de type stator | utilisé comme deuxième disque stator d'extrémité | utilisé comme deuxième disque stator d'extrémité | utilisé dans un disque complété lui-même utilisé comme disque stator intermédiaire |

Il convient de noter que, grâce à l'invention, il est possible d'utiliser au cours de trois vies les disques ayant servi de disques stator d'extrémité. En effet, un disque stator d'extrémité est recouvert usuellement d'un revêtement antioxydant qui a tendance à pénétrer profondément dans le disque d'extrémité (jusqu'à plusieurs millimètres). Or cet antioxydant dégrade les performances de friction dudit disque. Grâce à l'invention, en début de troisième vie, le disque stator d'extrémité est suffisamment fin pour ne contenir que peu ou plus d'antioxydant tout en étant suffisamment épais pour pouvoir former un disque complété stator intermédiaire.

Différentes piles de disques peuvent ainsi être formées selon l'invention. Il suffit en effet d'alterner par exemple les configurations dans lesquelles les disques rotor ont tous une épaisseur sensiblement égale à l'épaisseur initiale e et les disques stator ont tous une épaisseur sensiblement égale à la deuxième épaisseur e₂, avec les configurations dans lesquelles les disques stator ont tous une épaisseur sensiblement égale à l'épaisseur initiale e et les disques rotor ont tous une épaisseur sensiblement égale à la deuxième épaisseur e₂. Puis, lorsque suffisamment de disques complétés peuvent être formés à partir des disques rotor et stator en début de troisième vie, on crée une pile de disques comprenant uniquement des disques complétés en tant que disques intermédiaires.

Grâce au procédé de l'invention, on peut obtenir les configurations de piles de frein suivantes :
- première configuration
   *premier disque stator d'extrémité en début de première vie
   *disques intermédiaires stator en début de première vie
   *disques rotor en début de deuxième vie
   *deuxième disque stator d'extrémité en début de première vie;
- deuxième configuration
   *premier disque stator d'extrémité en début de deuxième vie
   *disques rotor en début de première vie
   *disques stator intermédiaires en début de deuxième vie
   *deuxième disque stator d'extrémité en début de deuxième vie;
- troisième configuration ;
   *premier disque stator d'extrémité en début de deuxième vie
   *disques rotor intermédiaires complétés qui sont formés chacun de deux disques rotor en début de troisième vie
   *disques stator intermédiaires complétés qui sont formés chacun de deux disques stator en début de troisième vie
   *deuxième disque stator en début de première vie;
- quatrième configuration
   *premier disque stator d'extrémité en début de première vie
   *disques rotor intermédiaires complétés qui sont formés chacun de deux disques rotor en début de troisième vie
   *disques stator intermédiaires complétés qui sont formés chacun de deux disques stator en début de troisième vie
   *deuxième disque stator d'extrémité en début de deuxième vie.

Pour la première configuration, tous les disques de la pile de disques peuvent ainsi être recyclés en fin de cycle selon le procédé de l'invention : les disques rotor peuvent être complétés pour être utilisé au cours d'une troisième vie dans une pile de disques selon la troisième ou la quatrième configuration et les différents disques stator peuvent être utilisés dans une pile de disques selon la deuxième configuration en étant associé à des disques rotor en début de première vie.

De même, pour la deuxième configuration, tous les disques de la pile de disques peuvent ainsi être recyclés en fin de cycle selon le procédé de l'invention : les différents disques stator peuvent être complétés pour être utilisé au cours d'une troisième vie dans une pile de disques selon la troisième ou la quatrième configuration et les différents disques rotor peuvent être utilisés dans une pile de disques selon la première configuration en étant associé à des disques stator en début de première vie.

Bien entendu l'invention n'est pas limitée à la mise en oeuvre décrite et on peut y apporter des variantes sans sortir du cadre de l'invention tel que défini par les revendications.

Le procédé est également applicable à des disques de freins de véhicule autres que des freins d'aéronef. Le procédé est également applicable à des disques d'autres freins qu'un frein électromécanique comme par exemple un frein hydraulique.

Bien qu'ici le procédé soit mis en oeuvre pour le recyclage et l'utilisation d'un disque du type rotor, le procédé pourra tout aussi bien être mis en oeuvre sur un disque de type stator intermédiaire ou d'extrémité.

L'épaisseur initiale ne sera pas nécessairement la même entre un premier disque stator d'extrémité, un deuxième disque stator d'extrémité, un disque stator intermédiaire ou un disque rotor. « Épaisseur initiale » est un terme désignant uniquement l'épaisseur du disque considéré en début de première vie selon le procédé de l'invention. Typiquement, les disques stator d'extrémité ont une épaisseur de début de première vie comprise entre 60% et 140% de l'épaisseur en début de première vie d'un disque stator intermédiaire ou d'un disque rotor.

Ainsi, bien qu'on ait indiqué ici que le disque rotor était associé en début de deuxième vie à un disque stator intermédiaire d'épaisseur sensiblement égale à l'épaisseur initiale dudit disque rotor, un premier disque en début de deuxième vie selon le procédé de l'invention pourra de façon plus générale être associé à un autre disque d'épaisseur compris entre 60% et 140% de l'épaisseur initiale dudit disque. Si on ne considère que des disques intermédiaires (rotor ou stator), un premier disque intermédiaire en début de deuxième vie selon le procédé de l'invention pourra être associé à un autre disque intermédiaire (respectivement stator ou rotor) compris entre 95% et 105% de l'épaisseur initiale dudit premier disque intermédiaire.

De la même façon, en début de première vie, un premier disque pourra de façon plus générale être associé à un autre disque d'épaisseur comprise entre 60 et 140% de la deuxième épaisseur dudit premier disque. Si on ne considère que des disques intermédiaires (rotor ou stator), un premier disque intermédiaire en début de première vie selon le procédé de l'invention pourra être associé à un autre disque intermédiaire (respectivement stator ou rotor) compris entre 95% et 105% de la deuxième épaisseur dudit premier disque intermédiaire.

L'association d'un disque rotor en début de première vie avec un disque intermédiaire stator en début de deuxième vie n'aura de plus pas nécessairement la même épaisseur que l'association d'un disque rotor en début de deuxième vie avec un disque intermédiaire stator en début de première vie. Ceci dépendra principalement de l'épaisseur des disques d'extrémité de la pile de frein considéré. Typiquement, l'association d'un disque rotor en début de première vie avec un disque stator intermédiaire en début de deuxième vie aura une épaisseur comprise entre 100% et 105% de l'épaisseur de l'association d'un disque rotor en début de deuxième vie avec un disque stator en début de première vie.

Bien qu'ici on ait indiqué qu'à l'issue de la deuxième vie, le disque avait une épaisseur sensiblement égale à 40% de l'épaisseur initiale, le disque pourra avoir de façon plus générale une épaisseur de disque à l'issue de la deuxième vie comprise entre 50% de l'épaisseur initiale et 50% de la deuxième épaisseur. L'assemblage formé du disque avec la portion complémentaire aura alors une épaisseur comprise entre l'épaisseur initiale e et la deuxième épaisseur.

## Revendications

1. Procédé d'utilisation et de rénovation d'un premier disque de frein (9), le premier disque ayant une épaisseur initiale en début de première vie et étant de type rotor ou de type stator, le procédé comportant les étapes d'utiliser le premier disque (9) au cours d'une première vie dans une première pile de disques de frein (7) et d'utiliser le premier disque (9) au cours de deux autres vies en compensant une diminution d'épaisseur du premier disque après chaque vie selon les dispositions suivantes :
- après la première vie, surfacer le premier disque (9) et associer le premier disque (9) avec un deuxième disque (110) dans une deuxième pile de disques de frein (107), le deuxième disque ayant une épaisseur comprise entre 60% et 140% de l'épaisseur initiale et étant de type différent du premier disque;
- après une deuxième vie à l'issue de laquelle le premier disque à une épaisseur comprise entre 50% de l'épaisseur initiale et 50% de l'épaisseur du premier disque à l'issue de sa première vie, surfacer le premier disque (9) et l'assembler avec une portion complémentaire (14) de sensiblement même épaisseur pour former un disque complété qui est utilisé dans une troisième pile de disques de frein (207) et qui est de même type que le premier disque;
- après une troisième vie, rebuter le premier disque.

2. Procédé selon la revendication 1, dans lequel la portion complémentaire (14) est un autre disque en fin de deuxième vie qui a été surfacé et qui est de même type que le premier disque considéré.

3. Procédé selon la revendication 1, dans lequel à l'issue de la deuxième vie, on surface le premier disque (9) à une épaisseur de sensiblement 40% de l'épaisseur initiale.

4. Procédé selon la revendication 1, dans lequel au début de la première vie, on associe le premier disque (9) avec un troisième disque (10) dans la première pile de disques de frein (7), le troisième disque ayant une épaisseur comprise entre 60% et 140% de l'épaisseur du premier disque en début de deuxième vie et étant de type différent du premier disque.

## Patentansprüche

1. Verfahren zur Verwendung und Erneuerung einer ersten Bremsscheibe (9), wobei die erste Scheibe eine Anfangsdicke zu Beginn einer ersten Lebensdauer hat und vom Typ Rotor oder vom Typ Stator ist, wobei das Verfahren die Schritte des Verwendens der ersten Scheibe (9) während einer ersten Lebensdauer in einem ersten Bremsscheibenstapel (7) und des Verwendens der ersten Scheibe (9) während zweier weiterer Lebensdauern umfasst, indem eine Abnahme einer Dicke der ersten Scheibe nach jeder Lebensdauer gemäß den folgenden Bestimmungen kompensiert wird:
- nach der ersten Lebensdauer Oberflächenbehandeln der ersten Scheibe (9) und Verbinden der ersten Scheibe (9) mit einer zweiten Scheibe (110) in einem zweiten Bremsscheibenstapel (107), wobei die zweite Scheibe eine Dicke zwischen 60% und 140% der Anfangsdicke hat und vom anderen Typ als die erste Scheibe ist;
- nach einer zweiten Lebensdauer, an deren Ende die erste Scheibe eine Dicke zwischen 50% der Anfangsdicke und 50% der Dicke der ersten Scheibe am Ende ihrer ersten Lebensdauer hat, Oberflächenbehandeln der ersten Scheibe (9) und Zusammenfügen derselben mit einem komplementären Abschnitt (14) mit im Wesentlichen gleicher Dicke, um eine vervollständigte Scheibe zu bilden, die in einem dritten Bremsscheibenstapel (207) verwendet wird und die vom gleichen Typ wie die erste Scheibe ist;
- nach einer dritten Lebensdauer Aussortieren der ersten Scheibe.

2. Verfahren nach Anspruch 1, bei dem der komplementäre Abschnitt (14) eine andere Scheibe am Ende der zweiten Lebensdauer ist, die oberflächenbehandelt wurde und die vom gleichen Typ wie die betrachtete erste Scheibe ist.

3. Verfahren nach Anspruch 1, bei dem am Ende der zweiten Lebensdauer die erste Scheibe (9) auf eine Dicke von im Wesentlichen 40% der Anfangsdicke oberflächenbehandelt wird.

4. Verfahren nach Anspruch 1, bei dem zu Beginn der ersten Lebensdauer die erste Scheibe (9) mit einer dritten Scheibe (10) in dem ersten Bremsscheibenstapel (7) verbunden wird, wobei die dritte Scheibe eine Dicke zwischen 60% und 140% der Dicke der ersten Scheibe zu Beginn der zweiten Lebensdauer hat und vom anderen Typ als die erste Scheibe ist.

## Claims

1. A method of use and renovation for using and renovating a first brake disk (9), the first disk having an initial thickness at the beginning of a first life and being of the rotor type or of the stator type, the method comprising the steps of using the first disk (9) during a first life in a first stack of brake disks (7) and using the first disk (9) during two other lives while compensating for a reduction in the thickness of the first disk after each life in application of the following provisions:
• after the first life, surfacing the first disk (9) and associating the first disk (9) with a second disk (110) in a second stack of brake disks (107), the second disk having thickness lying in the range 60% to 140% of the initial thickness and being a disk of type different from the first disk;
• after a second life at the end of which the first disk has thickness lying in the range 50% of the initial thickness to 50% of the thickness of the first disk at the end of its first life, surfacing the first disk (9) and assembling it with a complementary portion (14) of substantially the same thickness in order to form a complemented disk that is used in a third stack of brake disks (207) and that is of the same type as the first disk;
• after a third life, discarding the first disk.

2. A method according to claim 1, wherein the complementary portion (14) is another disk at the end of its second life that has been surfaced and that is of the same type as the first disk under consideration.

3. A method according to claim 1, wherein at the end of the second life, the first disk (9) is surfaced to a thickness of substantially 40% of the initial thickness.

4. A method according to claim 1, wherein at the beginning of the first life, the first disk (9) is associated with a third disk (10) in the first stack of brake disks (7), the third disk having thickness lying in the range 60% to 140% of the thickness of the first disk at the beginning of its second life and being of type different from the first disk.
